# EUROPEAN PATENT SPECIFICATION

(11) **EP 4 256 257 B1**
(45) Date of publication and mention of the grant of the patent: **16.09.2026**
(21) Application number: 21835831.5
(22) Date of filing: 02.12.2021
(51) Int. Cl.: B60L 53/36, F25D 29/00

(54) **SYSTEM FOR THE AUTOMATIC CONNECTION AND/OR DISCONNECTION OF THE ELECTRIC POWER SUPPLY AND/OR DATA CONNECTION FOR REFRIGERATED CONTAINERS**
SYSTEM ZUM AUTOMATISCHEN EIN- UND/ODER AUSSCHALTEN DER STROMVERSORGUNG UND/ODER DATENVERBINDUNG FÜR KÜHLCONTAINER
SYSTÈME DESTINÉ À LA CONNEXION ET/OU À LA DÉCONNEXION AUTOMATIQUES DE L'ALIMENTATION ÉLECTRIQUE ET/OU À LA CONNEXION DE DONNÉES POUR DES RÉCIPIENTS RÉFRIGÉRÉS

(30) Priority: 03.12.2020 IT 202000029687
(43) Date of publication of application: 11.10.2023
(73) Proprietor: S-CUBE SRL, 09125 Cagliari (CA) (IT)
(72) Inventor: CURLETTO, Pierluigi, 09125 Cagliari (CA) (IT); PELLEGROTTI, Fulvio, 09125 Cagliari (CA) (IT)
(74) Representative: Bottino, Giovanni
(86) International application number: PCT/IB2021/061234
(87) International publication number: WO 2022/118239

(56) References cited:
- WO-A1-2019/224793
- DE-A1- 102017 116 819
- US-A1- 2019 237 957
- "Robotized reefer power connection ED - Darl Kuhn", IP.COM, IP.COM INC., WEST HENRIETTA, NY, US, 14 October 2020 (2020-10-14), XP013188114, ISSN: 1533-0001

## Description

The present invention relates to a system for the automatic connection and/or disconnection of the electric power supply and/or data connection for refrigerated containers by means of at least one mechanical arm.

One type of electrically powered device is represented by refrigerated containers, or reefers, in both ports and on board container ships. Although the invention is described hereafter mainly in the port context, such a reference context is not to be understood as limiting, since the invention is applicable in both the port and naval contexts and to a plurality of different technical areas in which devices are involved which need to be connected and disconnected to an electricity distribution grid and/or data transmission network. For this reason, the term container in the following text can identify any type of device which requires an electrical power supply or charging connection and/or data communication.

The refrigerated container is provided with an electric compressor for the maintenance of internal conditions (temperature, humidity) controlled based on the type of goods stowed which must be maintained during all phases of transport and intermediate storage, under penalty of deterioration and loss of the load with consequent legal actions for compensation for damages and insurance costs for their coverage.

The refrigerated container requires an electrical connection for the compressor power supply and a data connection for setting the operating parameters, their monitoring, transmission and recording.

Both container terminal ports and container ships must have electrical outlets to power the refrigerated containers, ensuring the connection, storage and monitoring of the set parameters.

The storage of such containers in the port area is mostly facilitated by dedicated structures called "reefer racks" consisting of metallic carpentry structures used to place the reefer containers in suitably equipped and dedicated ship yard areas and comprising walkways to ensure personnel access to the refrigerated containers. The reefer racks are provided with power supply points in equal number to the container storage capacity. Such structures allow operators to access the containers which can thus be stored on several levels in the areas served by the mechanical means (e.g., cranes on rails or wheels) used for their handling.

Document WO2019224792A1 of the same applicant describes an automated connection system for refrigerated containers with mechanical arms. In particular, a plurality of mechanical arms is arranged on a reefer rack at the refrigerated container stations. Each arm positions a movable connector near the refrigerated container connector, and an operator manually connects the refrigerated container connector to the movable connector to make the connection. To make the disconnection, the movable connector automatically ejects the refrigerated container connector, and the mechanical arm retracts to the resting position.

However, reefer racks are fixed and bulky structures, and have a finite number of stations, so have difficulty meeting very variable needs, for example as a result of peak requests. If all the stations are occupied, the refrigerated containers are typically stacked in ship yard areas and manually connected to outlets included on the ground or in dedicated columns. This highly dangerous solution for port operators is also the only one possible in all those situations in which reefer racks are not present.

A carriage and mechanical arm system for the automatic connection of such stacked refrigerated containers is known from the aforesaid document, but such implementation still requires fixed and laborious systems and is not of immediate deployment and removal. Documents WO2019/224793A1, US2019/237957A1, DE102017116819A1 and article "Robotized reefer power connection ED - Darl Kuhn", IP.COM, IP.COM INC., WEST HENRIETTA, NY, US, 14 October 2020 (2020-10-14), XP013188114, ISSN: 1533-0001 disclose further systems.

Therefore, in the current state of the art there is an unmet need for an easily installable and removable connection/disconnection system in situations where there are no reefer racks, or where there are reefer racks which can serve only a limited number of stations, insufficient for the contingent demand.

The present invention aims to overcome the drawbacks of the state of the art with a system according to claim 1, which further comprises a transportable support structure provided with means of electric power supply and/or connection to a data transmission network, said support structure being provided with said mechanical arm, and said mechanical arm being positioned so as to define an operating area outside said support structure and at least partially superimposed on a station of one said refrigerated container.

This allows to define a unit which can be moved to any location and thereby constitute an automated system for connecting and disconnecting refrigerated containers. This is immediately applicable, for example, in any port yard or interport area large enough to accommodate at least one said support structure and one or more refrigerated containers.

According to an exemplary embodiment, said electric power supply means comprise one or more electricity generation units.

This makes the system operational even without the connection to an external and independent electric grid with regard to the power supply of refrigerated containers, without the need, at least for a certain period of time, for a connection to an electricity distribution grid.

According to a further exemplary embodiment, said electric power supply means comprise a connection unit to an electricity distribution grid.

This may alternatively or preferably be provided in combination with the presence of one or more of the above-mentioned electricity generation units, so as to increase the system versatility. In fact, in situations where a connection to an electricity distribution grid is envisaged, the latter can be used to power the refrigerated containers. However, the same support structure can subsequently be moved to places without such a connection, and equally ensure the electric power supply of the refrigerated containers.

In an embodiment said support structure has the standard dimensions of a container and is provided with standard means of coupling a container.

This proves particularly advantageous in all the port or interport situations provided with fixed cranes or cranes on rails or wheels for the transport of containers, which can therefore also be used in order to handle the support structures without needing modifications or dedicated tools.

**In** a preferred exemplary embodiment, multiple operating areas are included, arranged on opposite sides of the support structure having the standard shape and dimensions of a container.

This allows to define two zones provided with refrigerated container stations and to position the support structure between such two zones so as to operate on the containers stored in both zones.

**In** a further embodiment a plurality of said support structures are included, which support structures are positionable adjacent to each other to form a modular system.

**It** is thereby possible to include a number of support structures sized to the number of refrigerated containers to be managed. Each support structure therefore constitutes a module of a composite system, in which the various modules are placed side by side or superimposed to form a single structure adapted to operate on a potentially very large number of refrigerated containers.

According to an embodiment, a plurality of said mechanical arms is included acting on a corresponding plurality of refrigerated container stations.

**It** is thereby possible for each arm to operate on a single station of a respective refrigerated container.

According to a further embodiment at least two said mechanical arms are positioned in respective substantially aligned positions along a vertical axis for the action of the two mechanical arms on two corresponding refrigerated containers, of which a lower refrigerated container and an upper refrigerated container, which upper refrigerated container rests on said lower refrigerated container.

It is thereby possible to operate on containers arranged in two pitches with a single support structure, to increase the number of containers served by a single support structure.

In a further exemplary embodiment, means are provided for translating said mechanical arm into positions such that said mechanical arm alternately acts on a plurality of said refrigerated container stations.

This allows to include a small number of mechanical arms operating on different refrigerated container stations. It is possible to include even a single mechanical arm which can be moved so as to operate on all positions, even on both sides of the support structure.

According to an exemplary embodiment, the translation means comprise a mechanical arm support carriage, which carriage is translatable along a guide. According to an improvement, the carriage is provided with an independent electric propulsion system comprising a power supply battery. Advantageously, the support structure is provided with a battery charging station of said carriage.

In an embodiment, a plurality of said support structures are included, which are side by side so as to constitute a single said translation guide of said mechanical arm, so that said mechanical arm is translatable into at least two adjacent support structures.

A modular system can thus be composed consisting of a row of interconnected structures so as to create a single guide on which one or more arms included on translatable carriages can be moved to operate on the different refrigerated container stations.

These and other features and advantages of the present invention will become clearer from the following description of some non-limiting exemplary embodiments illustrated in the attached drawings in which:
fig. 1 illustrates an exemplary embodiment of the support structure;
fig. 2 illustrates the support structure in operating condition for the connection and disconnection of a plurality of refrigerated containers;
fig. 3 illustrates an embodiment of a modular system consisting of two support structures.

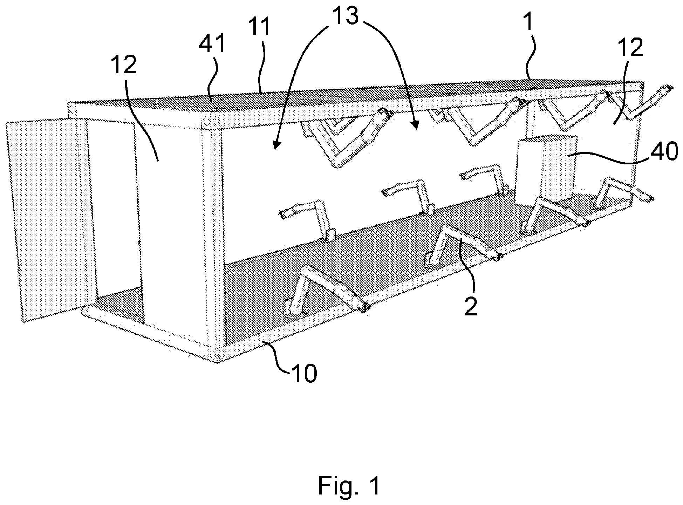

Figure 1 illustrates an exemplary embodiment of a transportable support structure 1 and provided with a plurality of mechanical arms 2. The support structure 1 has the standard shape and size of a container and is provided with standard coupling means of a container.

Therefore, the support structure 1 is parallelepiped in shape, having a lower base face 10 and an upper cover face 11, two head faces 12, defining the width of the structure, and two side faces 13, defining the length of the structure, the length being greater than the width. Typical container dimensions are a width of 8 feet (244 cm) and a height of 8 feet and 6 inches (259 cm), while the length has two standard values of 20 and 40 feet (610 and 1220 cm). The support structure 1 can be of any suitable material, preferably of metal.

At least one head wall 12 is provided with an access door inside.

The side faces are open or provided with removable or openable panels.

Each mechanical arm 2 is positioned so as to extend through an open side face so as to define an operating area 20 outside the support structure 1 and at least partially superimposed on a station of one said refrigerated container 3.

In the figures, the support structure 1 has the standard shape and dimensions of a container, however, it can have any shape adapted to define external operating areas at least partially superimposed on the stations of the refrigerated containers 3.

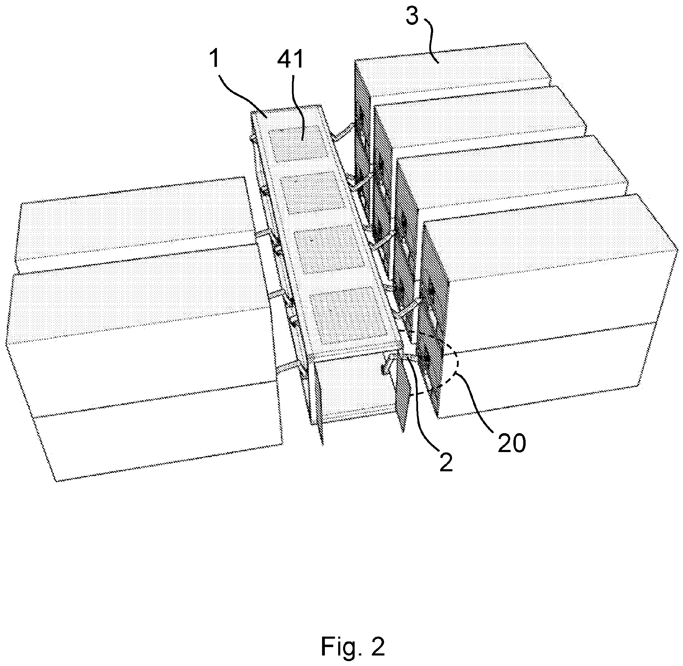

This is visible in figure 2, in which there are several operating areas 20 arranged on opposite sides of the support structure 1 so as to define two zones provided with stations of refrigerated containers 3 and to position the support structure interposed between such two zones so as to operate on the containers 3 stored in both zones.

In particular, in the example in the figure a plurality of mechanical arms 2 is included acting on a corresponding plurality of stations of refrigerated containers 3.

The mechanical arms 2 are positioned in pairs, the arms 2 of each pair being arranged in substantially aligned positions along a vertical axis. Thereby the two arms 2 constituting the pair act respectively on two corresponding refrigerated containers 3 arranged one above the other to form two pitches.

The support structure 1 illustrated in the figures is provided with four pairs of mechanical arms 2 per side, for a total of 16 stations of refrigerated containers 3 which can be managed.

The refrigerated containers 3 are arranged with the compressor and the electrical power and data transmission sockets oriented towards the support structure 1, so that they can be reached by the mechanical arms 2.

The support structure 1 is provided with electric power supply means. Such means can comprise at least one electricity generation unit, such as a diesel generator 40 and/or photovoltaic panels 41 preferably arranged on the top cover face 11. Alternatively or in combination, the electric power supply means comprise a unit for connecting to an electricity distribution grid.

The mechanical arms 2 can connect and/or disconnect the refrigerated containers 3 both to the electric power supply and to the data transmission network in many ways known in the state of the art, for example by inserting one or more movable connectors into one or more corresponding outlets included on the container 3, or by grasping movable connectors of the container 3 and inserting them into special outlets included in the support structure 1.

The electric power supply means preferably comprise an electricity sorting unit connected to the electricity generation unit and/or provided with the connection unit to the electricity distribution grid. The cables carrying the electricity to each mechanical arm 2 and therefore to each refrigerated container 3 diverge from the control unit.

The support structure 1 is provided with means for connecting to a data transmission network, which can be wired or wireless. In the case of wired data transmission, said control unit also receives all the cables which derive from the mechanical arms 2 and therefore which are connected to the refrigerated containers 3, and is also provided with a connection unit to the data transmission network. In the case of wireless transmission, it is possible to include a central wireless transmission unit in said control unit, or a plurality of local wireless transmission units, each local unit being associated with a respective mechanical arm 2.

Advantageously, it is possible to consider a support structure 1 as a single module to be inserted in a system consisting of a plurality of support structures 1. A modular system is thus created, in which two or more support structures 1 are positioned adjacent to one another, in particular aligned along a common longitudinal axis and/or superimposed on one another. The overall modular system thus created can therefore extend in length, by arranging two head faces of two adjacent support structures 1 facing each other, or in height, by arranging an upper support structure 1 resting on a lower support structure 1.

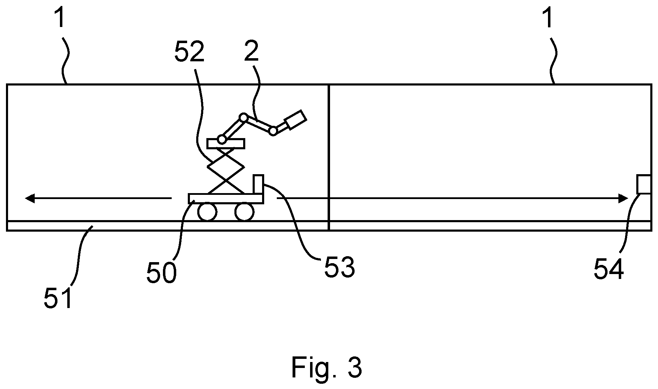

Figure 3 illustrates an embodiment in which two support structures 1 are connected, aligned in length to form a single modular system.

Means are included for translating the mechanical arm into positions such that the mechanical arm 2 acts alternately on a plurality of stations of refrigerated containers 3. In the example in the figure there is a single mechanical arm 2 which can be moved so as to be able to operate on all the refrigerated container stations. In this case, the translation means comprise a support carriage 50 of the mechanical arm 2. The carriage 50 is translatable along a guide 51. The guide 51 can be positioned below as in the example in the figure, or on the ceiling, in that case the carriage 50 hanging. It is possible to include a single mechanical arm 2 with a single guide 50 positioned in the centre, i.e., in a position equidistant from the side faces 13. In this case, the arm is long enough to be able to operate in both opposite storage areas of the refrigerated containers included on both sides of the support structure 1. Alternatively, it is possible to include two parallel guides 51 for two mechanical arms 2, each near a respective side face 13. The carriage 50 is advantageously provided with a lifting member of the mechanical arm 2 which can therefore be moved in height. This allows to obtain, with a single mechanical arm 2, the same operation on two different pitches of refrigerated containers 3 ensured by the paired configuration of mechanical arms 2 of figures 1 and 2 described above.

In the specific example in figure 3, a plurality of support structures 1 are included side by side. The support structures 1 and the guides 51 are configured so that, in the adjacent condition of the support structures 1, a single translation guide of the carriage 50 is formed. Thereby, the mechanical arm 2 is translatable seamlessly in both support structures 1.

However, it is clear to those skilled in the art that it is possible to include a configuration with multiple mechanical arms as shown in figures 1 or 2 in a modular system such as that of figure 3. Similarly, it is possible to include a mechanical arm 2 translatable by means of a carriage 50 in a single support structure 1.

In the embodiment of figure 3, the mechanical arm 2 can grasp movable connectors included in predetermined stations in the support structure 1 and bring them to connect on the refrigerated containers 3. Preferably, the mechanical arm 2 has a gripping element placed at its free end, such as a gripper or the like. Advantageously, the movable connectors are connected to rewind coils such that once disconnected they are returned to the initial position.

It is possible to include cable translation means of the carriage 50, or a wired electric propulsion. Preferably, the carriage 50 is provided with an independent electric propulsion system, provided with a rechargeable power supply battery. In the latter case, the support structure 1 comprises a charging station 54 to which the carriage 50 automatically travels when the battery begins to be discharged. The carriage 50 is provided with a charging connector 53 automatically connectable to a corresponding connector included in the charging station 54, for supplying electrical current to the battery.

## Claims

1. System for the automatic connection and/or disconnection of the electric power supply and/or data connection for refrigerated containers (3) by means of at least one mechanical arm (2),
**characterized in that**
it comprises a support structure (1) transportable and provided with means for electric power supply and/or connection to a data transmission network, said support structure (1) being provided with said mechanical arm (2), and said mechanical arm (2) being positioned so as to define an operating area (20) outside said support structure (1) and at least partially superimposed on a position of a said refrigerated container (1).

2. System according to claim 1, wherein said electric power supply means comprise at least one electricity generation unit (40, 41).

3. System according to claim 1 or 2, wherein said electric power supply means comprise a unit for connecting to an electricity distribution grid.

4. System according to one or more of the preceding claims, wherein said support structure (1) has the standard dimensions of a container and is provided with standard means for coupling a container.

5. System according to one or more of the preceding claims, wherein a plurality of said support structures (1) are included, which support structures (1) are positionable adjacent to each other to form a modular system.

6. System according to one or more of the preceding claims, wherein a plurality of said mechanical arms (2) is included acting on a corresponding plurality of stations of refrigerated containers (3).

7. System according to claim 6, wherein at least two said mechanical arms (2) are positioned in respective substantially aligned positions along a vertical axis for the action of the two mechanical arms on two corresponding refrigerated containers (3), of which a lower refrigerated container (3) and an upper refrigerated container (3), which upper refrigerated container (3) rests on said lower refrigerated container (3).

8. System according to one or more of claims 1 to 5, wherein means are included for translating said mechanical arm (2) into positions such that said mechanical arm (2) acts alternately on a plurality of said stations of refrigerated containers (3).

9. System according to claim 8, wherein the translation means comprise a support carriage (50) of the mechanical arm (2), which carriage (50) is translatable along a guide (51).

10. System according to claim 9, wherein a plurality of said support structures (1) are included, which are side by side so as to constitute a said single guide (51) for translating said mechanical arm (2), so that said mechanical arm (2) is translatable into at least two adjacent support structures (1).

## Patentansprüche

1. System zum automatischen Anschließen und/oder Trennen der Stromversorgung und/oder der Datenverbindung für Kühlcontainer (3) mittels mindestens eines mechanischen Arms (2),
**dadurch gekennzeichnet, dass**
es eine transportable Tragkonstruktion (1) umfasst, die mit Mitteln zur Stromversorgung und/oder zum Anschluss an ein Datenübertragungsnetz ausgestattet ist, wobei die Tragkonstruktion (1) mit dem mechanischen Arm (2) versehen ist und der mechanische Arm (2) so positioniert ist, dass er einen Arbeitsbereich (20) außerhalb der Tragkonstruktion (1) definiert, der sich zumindest teilweise mit einer Position eines der Kühlcontainer (1) überlagert ist.

2. System nach Anspruch 1, wobei die Mittel zur Stromversorgung mindestens eine Stromerzeugungseinheit (40, 41) umfassen.

3. System nach Anspruch 1 oder 2, wobei die Mittel zur Stromversorgung eine Einheit zum Anschluss an ein Stromverteilungsnetz umfassen.

4. System nach einem oder mehreren der vorstehenden Ansprüche, wobei die Tragkonstruktion (1) die Standardabmessungen eines Containers aufweist und mit Standardvorrichtungen zum Ankoppeln eines Containers versehen ist.

5. System nach einem oder mehreren der vorstehenden Ansprüche, wobei eine Vielzahl der Tragkonstruktionen (1) vorgesehen ist, welche nebeneinander positionierbar sind, um ein modulares System zu bilden.

6. System nach einem oder mehreren der vorstehenden Ansprüche, wobei eine Vielzahl der mechanischen Arme (2) vorgesehen ist, die auf eine entsprechende Vielzahl von Stationen mit Kühlcontainern (3) einwirken.

7. System nach Anspruch 6, wobei mindestens zwei der mechanischen Arme (2) in jeweils im Wesentlichen fluchtenden Positionen entlang einer vertikalen Achse angeordnet sind, damit die beiden mechanischen Arme auf zwei entsprechende Kühlcontainer (3) einwirken können, nämlich einen unteren Kühlcontainer (3) und einen oberen Kühlcontainer (3), wobei der obere Kühlcontainer (3) auf dem unteren Kühlcontainer (3) aufliegt.

8. System nach einem oder mehreren der Ansprüche 1 bis 5, wobei Mittel vorgesehen sind, um den mechanischen Arm (2) in solche Positionen zu verschieben, dass der mechanische Arm (2) alternierend auf mehrere der Stationen mit Kühlcontainern (3) einwirkt.

9. System nach Anspruch 8, wobei die Verschiebungsmittel einen Tragwagen (50) für den mechanischen Arm (2) umfassen, wobei der Tragwagen (50) entlang einer Führung (51) verschiebbar ist.

10. System nach Anspruch 9, wobei mehrere der genannten Tragkonstruktionen (1) vorgesehen sind, die nebeneinander angeordnet sind, um eine der genannten einzigen Führung (51) zum Verschieben des mechanischen Arms (2) zu bilden, sodass der mechanische Arm (2) in mindestens zwei benachbarte Tragkonstruktionen (1) verschiebbar ist.

## Revendications

1. Système destiné à la connexion et/ou à la déconnexion automatique de l'alimentation électrique et/ou de la connexion de données pour des conteneurs réfrigérés (3) au moyen d'au moins un bras mécanique (2), **caractérisé en ce qu'**
il comprend une structure de support (1) transportable et munie de moyens d'alimentation électrique et/ou de connexion à un réseau de transmission de données, ladite structure de support (1) étant munie dudit bras mécanique (2), et ledit bras mécanique (2) étant positionné de manière à définir une zone d'opération (20) à l'extérieur de ladite structure de support (1) et se superposant au moins partiellement à une position d'un dit conteneur réfrigéré (1).

2. Système selon la revendication 1, dans lequel lesdits moyens d'alimentation électrique comprennent au moins une unité de production d'électricité (40, 41).

3. Système selon la revendication 1 ou 2, dans lequel lesdits moyens d'alimentation électrique comprennent une unité de raccordement à un réseau de distribution d'électricité.

4. Système selon une ou plusieurs des revendications précédentes, dans lequel ladite structure de support (1) présente les dimensions standard d'un conteneur et est pourvue de moyens standard pour l'accouplement d'un conteneur.

5. Système selon une ou plusieurs des revendications précédentes, dans lequel sont incluses plusieurs desdites structures de support (1), lesquelles structures de support (1) peuvent être positionnées les unes à côté des autres pour former un système modulaire.

6. Système selon l'une ou plusieurs des revendications précédentes, dans lequel une pluralité desdits bras mécaniques (2) est prévue, agissant sur une pluralité correspondante de stations de conteneurs réfrigérés (3).

7. Système selon la revendication 6, dans lequel au moins deux desdits bras mécaniques (2) sont positionnés dans des positions respectives sensiblement alignées le long d'un axe vertical pour l'action des deux bras mécaniques sur deux conteneurs réfrigérés (3) correspondants, à savoir un conteneur réfrigéré inférieur (3) et un conteneur réfrigéré supérieur (3), ce dernier reposant sur ledit conteneur réfrigéré inférieur (3).

8. Système selon une ou plusieurs des revendications 1 à 5, dans lequel des moyens sont prévus pour déplacer ledit bras mécanique (2) vers des positions telles que ledit bras mécanique (2) agisse alternativement sur une pluralité desdites stations de conteneurs réfrigérés (3).

9. Système selon la revendication 8, dans lequel les moyens de translation comprennent un chariot de support (50) du bras mécanique (2), lequel chariot (50) est translatable le long d'un guide (51).

10. Système selon la revendication 9, dans lequel sont prévues plusieurs desdites structures de support (1), qui sont disposées côte à côte de manière à constituer ledit guide unique (51) pour le déplacement dudit bras mécanique (2), de sorte que ledit bras mécanique (2) puisse être déplacé vers au moins deux structures de support adjacentes (1).
